# EUROPEAN PATENT SPECIFICATION

(11) **EP 1 473 868 B1**
(45) Date of publication and mention of the grant of the patent: **27.02.2008**
(21) Application number: 04076265.0
(22) Date of filing: 27.04.2004
(51) Int. Cl.: H04L 9/08

(54) **Method and apparatus for passing data securely between parties**
Verfahren und Vorrichtung zur gesicherten Übertragung von Daten zwischen Teilnehmern
Procédé et dispositif de transfert sécurisé de données entre des participants

(30) Priority: 28.04.2003 GB 0309560
(43) Date of publication of application: 03.11.2004
(73) Proprietor: Hewlett-Packard Development Company, L.P., Houston, Texas 77070 (US)
(72) Inventor: Rees, Robert Thomas Owen, Newport, NP10 8LU (GB)
(74) Representative: Franks, Adam Peter

(56) References cited:
- US-A1- 2002 129 261
- US-A1- 2002 161 997

## Description

### Field of the Invention

The present invention relates to a method and apparatus for passing data securely between parties and in particular, although not exclusively, for use when the originating party does not know the identity of the receiving party, or where the receiving party is not yet in a position to receive the data.

### Background of the Invention

For data to be passed between parties securely it is common for it to be encrypted. It is usual, at the time an originating party encrypts data, for the receiving and therefore decrypting party to be known, and hence for the two parties to be able to liaise appropriately concerning the symmetric key or asymmetric key pair to be used for encryption and decryption. However there are circumstances where the encrypting party will not know the identity of the decrypting party, indeed they might not yet exist, or the decrypting party may simply not yet be in a position to receive and decrypt the data (e.g. they do not yet have their computer system functioning or are not connected to the Internet). In such circumstances it may be necessary for the encrypting party to set a condition, comprising one or more criteria, which the decrypting party must meet to be able to receive and decrypt the data.

In the prior art there are some circumstances where messages are encrypted for a known recipient but cannot be decrypted until a predetermined condition, comprising one or more criteria, is met. For example in sealed bid auctions the bids may be submitted at any time up to a specified deadline but may only be decrypted by the receiving party after a certain date and time on or after that deadline. Thus in this case the condition is that the relevant date and time have passed. In addition, in the purchase of music via the Internet the music might be sent to the purchaser encrypted, but the purchaser might only be able to decrypt that data after the seller has received the necessary payment. In this case the condition is the payment being received by the seller.

US Patent Application 09/961,293, published as US2002/161997, to Yamasaki et al. describes a content distribution system in which a user supplied with a tamper resistant device can obtain controlled content. The tamper-resistant device is issued by a trusted authentication agency. The trusted authentication agent provides data to the tamper resistant device to calculate a key needed to decode the controlled content.

It is desirable to provide a method and apparatus for passing data securely between parties which can be used if the recipient is as yet unknown or not yet able to receive the data.

### Summary of the Invention

According to a first aspect of the present invention there is provided a method for a trusted party to facilitate the passing of data securely from an originator to a recipient, the data being encrypted with a first key, comprising providing a decryption key to the recipient to enable the recipient to decrypt the encrypted data; the method characterised by: receiving from the originator a condition selected by the originator which the recipient must meet; receiving from the recipient evidence that the condition has been met; comparing the evidence against the condition to confirm that the recipient does meet the condition; and providing the decryption key to the recipient only if the recipient meets the condition, the first key being generated without reference to the condition.

The trusted party may have an asymmetric key pair comprising a public key and a private key, of which the public key is known, in which case the method may further include receiving from the recipient the condition and first key encrypted using the public key of the trusted party, and decrypting the condition and first key using the private key of the trusted party prior to comparing the evidence against the condition to confirm whether the recipient meets the condition.

The method may further comprise receiving from the recipient its public key, encrypting the first key with the recipient's public key, and transmitting the encrypted first key to the recipient.

Suitably, the first key may be an asymmetric key pair.

The trusted party may be requested by the originator to generate an asymmetric key pair to act as the first key and once the asymmetric key pair has been generated the encrypting first key is provided to the originator. In this case, the method may include the additional steps of receiving the condition from the originator, storing the condition and the asymmetric first key pair, upon receipt of the evidence from the recipient that they meet the condition, retrieving the condition and asymmetric first key pair from store before comparing the evidence against the condition to confirm that the recipient does meet the condition, and providing to the recipient the decrypting key of the asymmetric first key pair to act as a decrypting first key.

The method may further comprise encrypting the decrypting first key with the recipient's public key before transmitting it to the recipient.

According to a second aspect of the invention there is provided a computer system for implementation of any of the above method steps.

### Brief Description of the Drawings

Embodiments of the invention will now be described, by way of example only, with reference to the accompanying drawings in which:
Figure 1 illustrates schematically a computer system according to the invention;

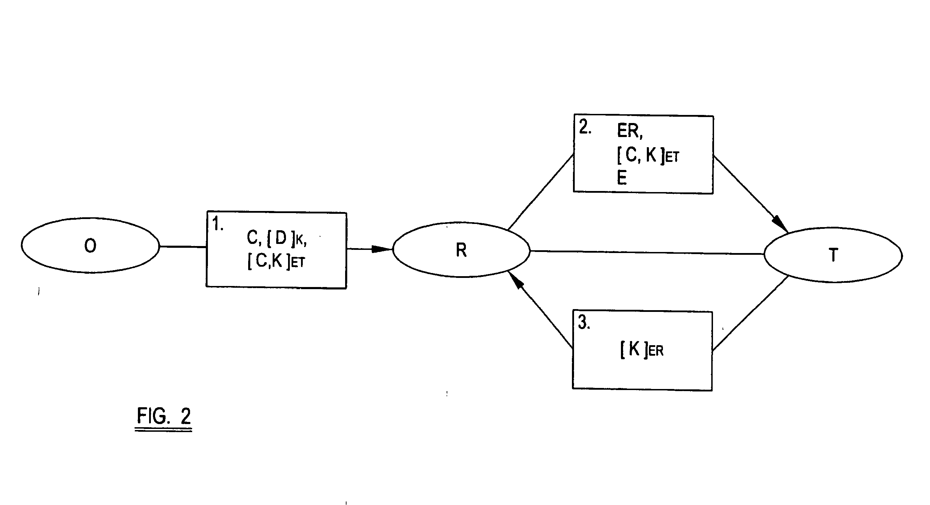

Figure 2 illustrates a first method according to the invention;

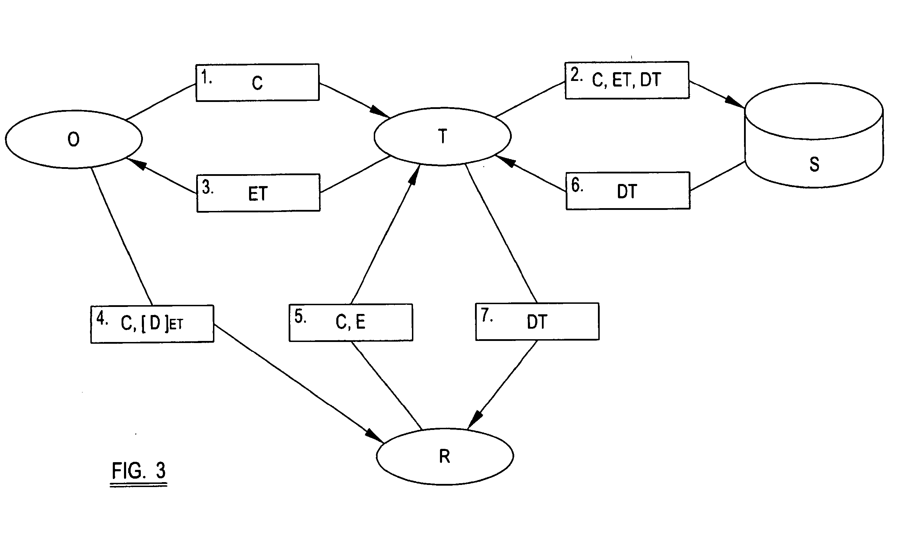

Figure 3 illustrates a second method according to the invention.

### Detailed Description of the Preferred Embodiments

The present invention addresses the issue of the originator of data wanting to make the data available, in a secure manner, i.e. encrypted, to a recipient who has yet to be identified or is not yet able to receive the data.

There are two basic forms of encryption; symmetric and asymmetric (also known as public key encryption or PKI), both of which may be used in methods according to the invention. In the former the same key is used to encrypt and decrypt the data. In the latter, different keys are used to encrypt and decrypt the data, and these are known as an asymmetric key pair. The asymmetric key pair comprises a public key which is known to everyone and is the key used to encrypt the data, and a private key which is known only to the recipient and which is used to decrypt the data. Clearly this is more secure than symmetric encryption as only the person with the private key can decrypt the data. The public and private keys are related in such a way that it is virtually impossible to deduce the private key from knowledge of the public key. There are various conventions for asymmetric encryption one of which is known as RSA (as it was developed by RSA Data Security, Inc.) and which has become the de-facto industry standard and is built into many common software products.

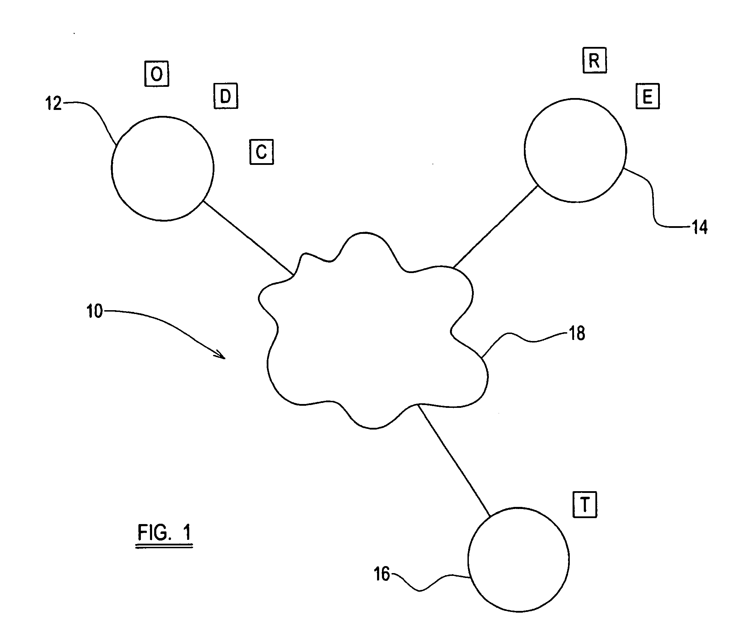

Figure 1 schematically illustrates a computer system 10, according to a first embodiment of the invention, which includes first, second and third computer entities 12, 14 and 16 respectively coupled via the Internet 18. The computer entities 12, 14 and 16 will typically be configured on three separate computer platforms but could be configured on a single platform.

Although the computer entities 12, 14 and 16 are coupled via the Internet 18 in this example it should be noted that the invention is equally applicable where the transfer of messages between the computer entities is by other means. For examples the computer entities 12, 14 and 16 may all be part of a private computer network such that the messages are still transmitted purely electronically, but they may also have no electronic connections between them with the messages being transferred with the use of physical storage media such as CD ROMs and/or DVDs which are passed from one party to another directly or indirectly via one or more intermediaries.

The first computer entity 12 has associated with it an originator O having data D which they wish to make available to a recipient R who is or will be associated with the second computer entity 14 and who at some time meets a condition C which the originator O has determined, and can prove so with evidence E. The condition C may for examples be that the recipient R has a certain role, or has signed a contract or made a payment. The third computer entity 16 has associated with it a trusted party T.

The originator O wishes to make the data D available to a recipient R who meets the condition C, although they do not know who that recipient R is or cannot send the data D directly to them. The first method according to the invention for doing so is as follows.

The originator O (using symmetric encryption) selects a first key K, using conventional methods such as a random number generator, and encrypts the data D using that first key K. The originator O also selects a trusted party T, which has an asymmetric key pair comprising a public key ET and a private key DT, and a condition C which the recipient R must meet to be able to receive the data D.

The originator O then encrypts the data D using the first key K to form [D]_{K}, and encrypts the condition C and first key K using the public key ET of the trusted party T to form [C, K]_{ET}, and makes the following information I:
(i) the condition C,
(ii) the encrypted data [D]_{K} and
(iii) the encrypted condition and first key [C, K]_{ET} available to the recipient R. As the originator O does not know the identity of the recipient R, or cannot for some reason send the data D directly to them, this is achieved by making the information I available on the Internet, or otherwise storing it or publishing it where the recipient can later find it.

The recipient R has an asymmetric key pair comprising a public key ER and a private key DR. When the recipient R has obtained the information I it sends to the trusted party T the following:
(a) its public key ER,
(b) the encrypted condition and first key [C, K]_{ET}, and
(c) the evidence E that it satisfies the condition C.
The trusted party T decrypts the condition C and first key K (using its private key DT), inspects the evidence E, compares it with the condition C and satisfies itself that the recipient R meets the condition C. When the trusted party T is satisfied that the recipient R meets the condition C it encrypts the first key K using the recipient's public key ER, to form [K]_{ER}, and transmits [K]_{ER} to the recipient R. The recipient R can then decrypt the first key K (using its private key DR) and uses the first key K to decrypt the data D.

Various modifications are possible to this first method according to the invention. As described the first key is a symmetric key, however the originator O may instead select an asymmetric key pair comprising public key EK and private key DK. If that is the case then the originator O uses the encrypting first key EK to encrypt the data D, forming [D]_{EK} and includes the decrypting first key DK in the information encrypted with the trusted party's public key ET to form [C, DK]_{ET}. Otherwise the method is unaltered.

Whatever form the first key takes, symmetric or assymetric, the key is selected in conventional manner using a random number generator or the like, without reference to any known data such as the condition, or the data to be passed to the recipient.

If communications between the trusted party T and the recipient R are secure then the recipient R need not send its public key ER to the trusted party T and the first key K need not be encrypted when sent to the recipient R by the trusted party T. In the event that communications between the various parties O, R and T are not secure then the messages exchanged between them may need further signatures and data to prevent replay and other forms of attack. These additional precautions are well known in the art and have been omitted from the description for clarity.

A second method according to the invention is as follows. The originator O selects a trusted party T and sends the condition C, which must be met by a recipient to be allowed to decrypt the data D, to the trusted party T. The originator O also delegates the task of selecting a first key to the trusted party T. The trusted party T therefore generates an asymmetric first key pair ET and DT specifically for this data exchange, e.g. using the well known RSA system, and in any event without reference to the condition C. The trusted party T stores the condition C along with the first key pair ET/DT in a store S (associated with the third computer entity 16). The trusted party T also provides the encrypting first key ET to the originator O. The originator O encrypts the data D using the encrypting first key ET, to form [D]_{ET}, and makes this along with the condition C available to the recipient R. This is achieved in the same way as described above with reference to the first method, i.e. by publishing it or storing it for later collection by the recipient R.

When the recipient R has obtained the encrypted data [D]_{ET} it sends a message to the trusted party T including the condition C and the evidence E that it meets that condition C. The trusted party T inspects the evidence E and satisfies itself that the recipient R does meet the condition C and, if satisfied, retrieves the decrypting first key DT from the store S and forwards it to the recipient R. The recipient R can then use the decrypting first key DT to decrypt the data D.

As for the first method there are possible variations to this second method also. In particular the various messages exchanged between the parties O, R and T may be via secure links or they may need to be further encrypted, signed or both, but as these are known techniques they have been omitted from the above description for the sake of clarity.

Although the exchange of messages between the parties O, T and R has been described as taking place via the Internet the method according to the invention is not limited to such a method of exchange. Any method may be used. For example the information I passed from the originator O to the recipient R in the first method described above, or indeed any other messages exchanged, may be stored on any form of storage media, such as a CD ROM or DVD and physically passed from one party to the other, via one or more intermediaries. In addition the various parties may all be connected to a private network of some kind such that communication between them takes place purely on that network and not via the Internet.

Practical examples of the methods according to the invention in use are as follows.

In the first example, the originator O is a lawyer acting for a company and wishes to send some data D, perhaps to do with a take over of the company, to a group of people, in this case all the directors of the company, whoever they may be at that time (thus there are multiple recipients R). The condition C in this case, that each recipient R has to meet, is that they are a director of the company. So the lawyer sends the encrypted data to the trusted party T as described above, and this is released to the directors R as and when they prove to the trusted party T that they are directors of the company. This means that the lawyer O does not have to check who the directors are at that time, making it easier for them to deal with sending the data to the correct people. If the lawyer concerned is an employee of the company then this whole exchange may take place on the company computer network without any external involvement.

In the second example, the originator O is an individual and the data D is their medical records which they wish to be made available to any person or hospital (the recipient R) who can prove that they meet the condition C that they are treating the originator O. Clearly at the time the originator O arranges for their medical records to be made available in this way they may well have no idea which doctors/hospitals they will in future be treated by, and therefore are unable to identify at that time the recipient(s) R to which the data D should be made available. This method enables the medical records D to be accessible to the relevant recipients R as and when necessary, i.e. as and when they can prove to the trusted party T that they are treating the individual O concerned. Bearing in mind the parties involved, this example is most likely to take place with exchanges occurring between the parties via the Internet.

In the third example, the originator O is someone who has reviewed a confidential document and wishes to provide comments (the data D) to the person (the recipient R) responsible for collating comments and making amendments (the condition C). The originator O may simply know that the recipient R is person working in a particular department, but not know which particular person has been given that role or duty. Thus the originator O makes the data D available using the method of the invention and the trusted party T releases it to the person who proves that they have been given the duty of collating comments and making amendments to the confidential document, i.e. meet the condition C.

## Claims

1. A method performed by a trusted party (T) to facilitate the passing of data securely from an originator (O) to a recipient (R), the data being encrypted with a first key (K), comprising providing a decryption key to the recipient to enable the recipient to decrypt the encrypted data, the method **characterised by**:
receiving from the originator a condition (C) selected by the originator which the recipient must meet;
receiving from the recipient evidence (E) that the condition has been met; comparing the evidence against the condition to confirm that the recipient does meet the condition; and
providing the decryption key to the recipient only if the recipient meets the condition, the first key being generated without reference to the condition.

2. The method of claim 1, wherein the trusted party has an asymmetric key pair comprising a public key and a private key, of which the public key is known, the method further including:
receiving from the recipient the condition and first key encrypted using the public key of the trusted party; and
decrypting the condition and first key using the private key of the trusted party prior to comparing the evidence against the condition to confirm whether the recipient meets the condition.

3. The method of claim 2, further comprising:
receiving from the recipient its public key;
encrypting the first key with the recipient's public key; and
transmitting the encrypted first key to the recipient.

4. The method of claim 2, wherein the first key is an asymmetric key pair.

5. The method of claim 1, wherein the trusted party is requested by the originator to generate an asymmetric key pair to act as the first key and once the asymmetric key pair has been generated the encrypting first key is provided to the originator, and the method includes the additional steps of:
receiving the condition from the originator;
storing the condition and the asymmetric first key pair;
upon receipt of the evidence from the recipient that they meet the condition, retrieving the condition and asymmetric first key pair from store before comparing the evidence against the condition to confirm that the recipient does meet the condition; and
providing to the recipient the decrypting key of the asymmetric first key pair to act as a decrypting first key.

6. A method according to claim 5, further comprising encrypting the decrypting first key with the recipient's public key before transmitting it to the recipient.

7. A computer system comprising means adapted to implement the method of any one of claims 1 to 6.

## Patentansprüche

1. Ein Verfahren, das von einer vertrauenswürdigen Partei (T) durchgeführt wird, um das sichere Übergeben von Daten von einem Urheber (0) zu einem Empfänger (R) zu erleichtern, wobei die Daten mit einem ersten Schlüssel (K) verschlüsselt sind, das ein Liefern eines Entschlüsselungsschlüssels an den Empfänger aufweist, um es dem Empfänger zu ermöglichen, die verschlüsselten Daten zu entschlüsseln, wobei das Verfahren **gekennzeichnet ist durch**:
Empfangen, von dem Urheber, einer **durch** den Urheber ausgewählten Bedingung (C), die der Empfänger erfüllen muss;
Empfangen, von dem Empfänger, eines Nachweises (E), dass die Bedingung erfüllt wurde;
Vergleichen des Nachweises mit der Bedingung, um zu bestätigen, dass der Empfänger die Bedingung erfüllt; und
Liefern des Entschlüsselungsschlüssels an den Empfänger nur wenn der Empfänger die Bedingung erfüllt, wobei der erste Schlüssel ohne Bezug zu der Bedingung erzeugt wird.

2. Das Verfahren gemäß Anspruch 1, bei dem die vertrauenswürdige Partei ein asymmetrisches Schlüsselpaar aufweist, das einen öffentlichen Schlüssel und einen privaten Schlüssel aufweist, von denen der öffentliche Schlüssel bekannt ist, wobei das Verfahren ferner Folgendes umfasst:
Empfangen, von dem Empfänger, der Bedingung und des ersten Schlüssels, die unter Verwendung des öffentlichen Schlüssels der vertrauenswürdigen Partei verschlüsselt wurden; und
Entschlüsseln der Bedingung und des ersten Schlüssels unter Verwendung des privaten Schlüssels der vertrauenswürdigen Partei vor dem Vergleichen des Nachweises mit der Bedingung, um zu bestätigen, ob der Empfänger die Bedingung erfüllt.

3. Das Verfahren gemäß Anspruch 2, das ferner folgende Schritte aufweist:
Empfangen, von dem Empfänger, seines öffentlichen Schlüssels;
Verschlüsseln des ersten Schlüssels mit dem öffentlichen Schlüssel des Empfängers; und
Übermitteln des verschlüsselten ersten Schlüssels an den Empfänger.

4. Das Verfahren gemäß Anspruch 2, bei dem der erste Schlüssel ein asymmetrisches Schlüsselpaar ist.

5. Das Verfahren gemäß Anspruch 1, bei dem die vertrauenswürdige Partei durch den Urheber aufgefordert wird, ein asymmetrisches Schlüsselpaar zu erzeugen, das als der erste Schlüssel dienen soll, und sobald das asymmetrische Schlüsselpaar erzeugt worden ist, wird der verschlüsselnde erste Schlüssel an den Urheber geliefert, und das Verfahren umfasst die zusätzlichen Schritte:
eines Empfangens der Bedingung von dem Urheber;
eines Speicherns der Bedingung und des asymmetrischen ersten Schlüsselpaars;
auf einen Empfang des Nachweises von dem Empfänger, dass er die Bedingung erfüllt, hin, eines Wiedergewinnens der Bedingung und des asymmetrischen ersten Schlüsselpaars aus dem Speicher vor dem Vergleichen des Nachweises mit der Bedingung, um zu bestätigen, dass der Empfänger die Bedingung erfüllt; und
eines Lieferns, an den Empfänger, des Entschlüsselungsschlüssels des asymmetrischen ersten Schlüsselpaars, das als ein entschlüsselnder erster Schlüssel dienen soll.

6. Ein Verfahren gemäß Anspruch 5, das ferner ein Verschlüsseln des entschlüsselnden ersten Schlüssels mit dem öffentlichen Schlüssel des Empfängers aufweist, bevor er an den Empfänger übermittelt wird.

7. Ein Computersystem, das eine Einrichtung aufweist, die angepasst ist, um das Verfahren gemäß einem der Ansprüche der 1 bis 6 zu implementieren.

## Revendications

1. Procédé exécuté par un tiers de confiance (T) pour faciliter le passage de données de manière sécurisée d'un expéditeur (0) à un destinataire (R), les données étant cryptées avec une première clef (K), comprenant l'envoi d'une clef de décryptage au destinataire pour permettre au destinataire de décrypter les données cryptées, le procédé étant **caractérisé par** :
■ la réception en provenance de l'expéditeur d'une condition (C) choisie par l'expéditeur que le destinataire doit remplir ;
■ la réception en provenance du destinataire de la preuve (E) que la condition a été remplie ;
■ la comparaison de la preuve avec la condition pour confirmer que le destinataire remplit la condition ; et
■ l'envoi de la clef de décryptage au destinataire seulement si le destinataire remplit la condition, la première clef étant générée sans référence à la condition.

2. Procédé selon la revendication 1, dans lequel le tiers de confiance possède une paire de clefs asymétriques comprenant une clef publique et une clef privée, parmi lesquelles la clef publique est connue, le procédé comprenant en outre :
■ la réception en provenance du destinataire de la condition et de la première clef cryptée en utilisant la clef publique du tiers de confiance ; et
■ le décryptage de la condition et de la première clef en utilisant la clef privée du tiers de confiance avant de comparer la preuve avec la condition afin de vérifier si le destinataire remplit la condition.

3. Procédé selon la revendication 2, comprenant en outre :
■ la réception en provenance du destinataire de sa clef publique ;
■ le cryptage de la première clef avec la clef publique du destinataire ; et
■ la transmission de la première clef cryptée au destinataire.

4. Procédé selon la revendication 2, dans lequel la première clef est une paire de clefs asymétriques.

5. Procédé selon la revendication 1, dans lequel le tiers de confiance reçoit une demande de l'expéditeur de générer une paire de clefs asymétriques servant de première clef et, une fois la paire de clefs asymétriques générée, la première clef de cryptage est envoyée à l'expéditeur, et le procédé comprend les étapes supplémentaires de :
■ réception de la condition en provenance de l'expéditeur ;
■ stockage de la condition et de la première paire de clefs asymétriques ;
■ à la réception de la preuve, en provenance du destinataire, qu'il remplit la condition, la récupération de la condition et de la première paire de clefs asymétriques stockée avant la comparaison de la preuve avec la condition pour vérifier que le destinataire remplit vraiment la condition ; et
■ l'envoi au destinataire de la clef de décryptage de la première paire de clefs asymétriques, servant de première clef de décryptage.

6. Procédé selon la revendication 5, comprenant en outre le cryptage de la première clef de décryptage avec la clef publique du destinataire avant sa transmission au destinataire.

7. Système informatique comprenant des moyens adaptés pour mettre en oeuvre le procédé selon l'une quelconque des revendications 1 à 6.
